# EUROPÄISCHE PATENTSCHRIFT

(11) **EP 2 651 665 B1**
(45) Veröffentlichungstag und Bekanntmachung des Hinweises auf die Patenterteilung: **25.04.2018**
(21) Anmeldenummer: 11785602.1
(22) Anmeldetag: 18.11.2011
(51) Int. Cl.: B60G 17/015, B60G 17/052

(54) **Vorrichtung und Verfahren zum Entlüften eines pneumatischen Systems**
Device and method for venting a pneumatic system
Dispositif et procédé de dégagement d'air d'un système pneumatique

(30) Priorität: 16.12.2010 DE 102010054702
(43) Veröffentlichungstag der Anmeldung: 23.10.2013
(73) Patentinhaber: WABCO GmbH, 30453 Hannover (DE)
(72) Erfinder: STABENOW, Uwe, 30880 Laatzen (DE); TORHOFF, Ingo, 30890 Barsinghausen (DE)
(74) Vertreter: Lauerwald, Jörg
(86) Internationale Anmeldenummer: PCT/EP2011/005832
(87) Internationale Veröffentlichungsnummer: WO 2012/079680

(56) Entgegenhaltungen:
- EP-A1- 0 379 759
- EP-A1- 0 908 335
- WO-A2-2007/118674
- DE-A1- 10 004 880
- DE-A1- 19 535 972
- DE-A1- 19 818 496
- DE-A1-102008 015 732
- DE-C1- 10 025 749
- DE-T5-112008 000 774
- US-A- 5 020 771

## Beschreibung

Die vorliegende Erfindung betrifft eine Vorrichtung zum Bereitstellen von Druckluft zum Betreiben eines pneumatischen Systems wie eine Luftfederungsanlage in Fahrzeugen gemäß dem Oberbegriff des Anspruchs 1.

Derartige Systeme sind aus dem Stand der Technik bekannt und werden in Fahrzeugen aller Art eingesetzt. Luftfederungsanlagen umfassen auch Niveauregelungseinrichtungen, mit denen der Abstand zwischen Fahrzeugachse und Fahrzeugaufbau eingestellt werden kann. Zum Verstellen des Abstandes umfassen die Luftfederungsanlagen beispielsweise Luftbälge, die mit zunehmender Befüllung den Fahrzeugaufbau anheben und entsprechend mit abnehmender Befüllung absenken. Mit wachsendem Abstand zwischen Fahrzeugachse und Fahrzeugaufbau, auch Bodenfreiheit genannt, werden die Federwege länger, wodurch bewirkt wird, dass auch größere Bodenunebenheiten überwunden werden können, ohne dass es zu einer Berührung von Fahrzeugaufbau und Fahrbahn kommt. Das ist ein wesentlicher Grund dafür, dass derartige Systeme zunehmend in Geländefahrzeugen und Sport Utility Vehicles (SUV) eingesetzt werden. Insbesondere die SUV's verfügen über sehr leistungsfähige Motoren, so dass diese hohe Geschwindigkeiten auf den Straßen erreichen können. Um die bei diesen hohen Geschwindigkeiten auftretende Fahrzeugdynamik beherrschen und ein sicheres Fahren ermöglichen zu können, ist es notwendig, die Bodenfreiheit so gering wie möglich zu wählen. Bei einer hohen Bodenfreiheit befindet sich zwangsläufig auch der ohnehin schon im Allgemeinen hoch liegende Schwerpunkt der SUV's noch höher über der Straße. Ferner erhöht sich mit wachsender Bodenfreiheit der Luftwiderstand der Fahrzeuge, so dass der Verbrauch steigt. Dieser Nachteil erhöht sich mit zunehmender Geschwindigkeit, so dass der Betrieb des Fahrzeuges mit möglichst geringer Bodenfreiheit bei höheren Geschwindigkeiten auch aus ökonomischer Sicht geboten ist.

Eine Komforteinbuße muss in folgender Situation hingenommen werden: Mündet ein SUV vom Gelände kommend, wo es mit hoher Bodenfreiheit bewegt wurde, in eine Straße ein und würde stark beschleunigt, so könnten hohe Geschwindigkeiten erreicht werden, ohne dass die Bodenfreiheit auf das aus den oben genannten Sicherheitsaspekten gebotene Niveau abgesenkt würde. Die Luftfederungsanlage muss zum Absenken des Niveaus des Fahrzeugaufbaus entlüftet werden, was eine bestimmte Zeit in Anspruch nimmt. Diese Zeit ist länger als die leistungsfähigen SUV's benötigen, um eine in Bezug auf die oben genannten Sicherheitsaspekte kritische Geschwindigkeit zu überschreiten. Um derartige Situationen zu verhindern, verändern die Sicherheitssysteme in Abhängigkeit der Geschwindigkeit solange die Bodenfreiheit, bis das erforderliche Niveau erreicht wurde. Die Dauer dieses Eingriffs der Sicherheitssysteme wird als unbefriedigend lang empfunden, so dass der Wunsch vorhanden ist, eine Vorrichtung bereitzustellen, welche den Absenkungsprozess des Fahrzeugaufbaus auf das notwendige Niveau so schnell durchführt, dass das Sicherheitssystem keinen oder nur einen für den Fahrzeugführer kaum wahrnehmbaren geschwindigkeitsbegrenzenden Eingriff vornehmen muss.

Derartige Luftfederungsanlagen werden mit Druckluft betrieben, die üblicherweise innerhalb eines Druckniveaus von 5 bis 20 bar arbeiten. Die Druckluft wird mit einem Kompressor erzeugt. Zum Betreiben der Luftfederungsanlage ist es notwendig, dass die Druckluft getrocknet wird. Ohne eine Lufttrocknung besteht die Gefahr der Bildung von Kondenswasser in der Luftfederungsanlage, das bei niedrigeren Temperaturen gefrieren könnte. Die sich bildenden Eiskristalle können empfindliche Teile wie Dichtungen, Luftbalge oder Ventile beschädigen, wodurch die Funktionsfähigkeit der Luftfederungsanlage und damit des Gesamtsystems gefährdet wird. Aus diesen Gründen weisen Luftfederungsanlagen einen Lufttrockner auf, welcher die Druckluft trocknet, bevor sie in das eigentliche Luftfederungssystem mit seinen entsprechenden Komponenten eintritt. Die üblicherweise verwendeten Lufttrockner weisen eine Granulatschüttung auf, welche von der Druckluft durchströmt wird. Beim Durchströmen nimmt die Granulatschüttung die in der Druckluft enthaltene Feuchtigkeit beispielsweise durch Adsorption auf. Das Granulat ist aber ab einem bestimmten Punkt gesättigt und kann keine weitere Feuchtigkeit mehr aufnehmen. Spätestens dann muss der Lufttrockner regeneriert werden, damit eine weitere Trocknung der Systemluft sichergestellt wird. Das geschieht dadurch, dass die Granulatschüttung bei jedem Entlüftungszyklus mit der getrockneten Druckluft aus dem Luftfederungssystem im Gegenstrom gegenüber der Befüllrichtung durchströmt wird.

Soll nun der Lufttrockner regeneriert und/oder das Luftfederungssystem zur Reduzierung der Bodenfreiheit entlüftet werden, muss der Entlüftungsweg geöffnet werden. Hierzu weisen herkömmliche Systeme, im Allgemeinen als "Normal-Release-Schaltungen" bezeichnet, ein Magnetventil auf, welches durch ein entsprechendes Signal von seiner normal geschlossenen Stellung ("Normally Closed", NC) geöffnet wird und das Entlüftungsventil selbst darstellt. In der geöffneten Stellung wird das Magnetventil vom gesamten zur Entlüftung des Luftfederungssystems abzuführenden Druckluftvolumen durchströmt, bevor die Druckluft die Regenerierung des Lufttrockners vornimmt.

Dadurch dass in dieser Schaltung das gesamte zur Entlüftung des Luftfederungssystems abzuführende Druckluftvolumen das Magnetventil durchströmen muss und das Magnetventil direkt geschaltet wird, sind der Ausgestaltung der Nennweite des Magnetventils und damit dem maximalen Volumenstrom für die Entlüftung gewisse Grenzen gesetzt. Zur Betätigung des Magnetventils muss eine bestimmte Stromstärke vorhanden sein, die in Fahrzeugen durch die Bordspannung oder ECU begrenzt ist. Wird der durchströmte Durchmesser der Leitungen, auch als Nennweite bezeichnet, zur Erhöhung des maximalen Volumenstroms vergrößert, so muss gleichzeitig auch das Magnetventil größer ausgelegt werden, da sich die vom Systemdruck aufgebrachte Kraft erhöht. Entsprechend muss auch die mittels des Magnetventils aufbringbare Kraft steigen. Dies führt dazu, dass das Magnetventil zum einen teurer wird, zum anderen aber auch die zur Steuerung benötigte Elektronik, zum Beispiel die Endstufen, größer und komplizierter wird. In Normal-Release-Schaltungen sinnvoll realisierbare Nennweiten betragen zwischen 0,8 bis 1,0 mm. Mit derartigen Nennweiten dauert der Entlüftungsprozess zur Absenkung des Fahrzeugaufbaus bei SUVs auf das notwendige Niveau unakzeptabel lange.

Eine Erhöhung der realisierbaren Nennweite lässt sich mit einer sogenannten "Quick-Release-Schaltung" erreichen. Dabei ist das Magnetventil in einer Nebenleitung angeordnet und das eigentliche Entlüftungsventil wird durch ein pneumatisches Relaisventil gebildet, so dass nicht mehr das gesamte zur Entlüftung des Luftfederungssystems abzuführende Druckluftvolumen das Magnetventil durchströmen muss, sondern nur noch der Teil, der zur Schaltung des Relaisventils notwendig ist. Dieser Teil des zur Schaltung des Relaisventils benötigten Luftvolumens ist so klein, dass er mit einer Nennweite zwischen 0,8 und 1,0 mm ohne weiteres realisiert werden kann. Folglich wird auch die Zeit, die für den Absenkungsprozess des Fahrzeugaufbaus auf das notwendige Niveau benötigt wird, verkürzt, da nun die Absenkgeschwindigkeit durch den wesentlich größeren Relaiskolbenquerschnitt begrenzt wird. Die mit der Quick-Release-Schaltung erreichbare Verkürzung des Absenkungsprozess ist allerdings nicht so stark wie gewünscht. Der limitierende Faktor ist hier das Relaisventil und eine dem Relaisventil vorgeschaltete Drossel, welches die verwendbare Nennweite nach oben hin begrenzt. Das Relaisventil muss entsprechend größer dimensioniert werden, wobei wiederum die Problematik der erhöhten Kosten und des größeren Bauraums auftreten. Eine mit der Quick-Release-Schaltung in vertretbarer Weise realisierbare Drosselnennweite liegt bei 2,0 mm, was zwar zu einer Verkürzung des Absenkungsprozesses führt, ohne jedoch den wünschenswerten Umfang zu erreichen. Für jede Drosselgröße muss aber auch das Relaisventil entsprechend dimensioniert werden, so dass für jede verwendete Nennweite ein passendes Relaisventil mit entsprechend angepassten Kolben und Federn verwendet werden muss. Ferner weist die Quick-Release-Schaltung den Nachteil auf, dass eine aufwendige und teure Vorsteuerung des Relaisventils durch ein zusätzliches Magnetventil notwendig ist. Ein weiterer Nachteil besteht darin, dass Lufttrockner und pneumatisches System / Gallery nicht pneumatisch getrennt sind. Die DE 10 2008 015732 A1 beschreibt eine Luftfederungsanlage mit einem druckentlasteten Entlüftungs-Magnetventil gemäß dem Oberbegriff des Anspruchs 1.

Die DE 100 25 749 C1 beschreibt ein Ventil zur Schaltung von großen Querschnitten zwischen einer Luftfeder und einem Zusatzvolumen der Luftfeder.

Die WO2007/118674 A2 beschreibt ein druckentlastetes Ein-/Aus-Magnetventil.

Die DE 11 2008 000774 T5 beschreibt ein Fluidkraftsteuerungssystem mit einem Magnetventil enthaltend einen Elektromagneten wobei der zugeführte elektrische Strom pulsiert mit einer konstanten Frequenz und das Pulsverhältnis variiert.

Aus der DE 35 42 974 A1 ist eine Niveauregeleinrichtung für Fahrzeuge mit Luftfedern bekannt, mit der in Abhängigkeit von der Fahrzeugbelastung ein vorgegebener Abstand der Fahrzeugzelle von der Fahrzeugachse durch Auffüllen oder Entleeren der Luftfedern aufrechterhalten werden kann. Die Einrichtung enthält ein mit dem Druck in den Luftfedern pneumatisch steuerbares Wegeventil zur Entlüftung der Luftfedern. Der Steuereingang des pneumatischen Wegeventils wird durch ein zweites, elektrisch steuerbares Wegeventil mit dem Druck in den Luftfedern beaufschlagt, um das pneumatische Wegeventil zu öffnen und die Luftfedern in die Atmosphäre zu entlüften. Die pneumatische Schaltung ist als sogenannte Quick-Release-Schaltung ausgebildet.
Die DE 199 11 933 offenbart einen Drucklufterzeuger mit einer Luftkomprimiereinrichtung und einem Lufttrockner. Druckluft kann durch ein elektrisch steuerbares und direkt geschaltetes, d.h. ohne zusätzliches Vorsteuer-Ventil, Magnetventil, das sogenannte Luftauslassventil, in die Umgebung abgelassen werden. Aufgrund der direkten Druckbeaufschlagung des elektrisch steuerbaren Luftauslassventils mit dem hohen Luftfederdruck bzw. Luftdruck im Trockner und der direkten Schaltung, ist die Nennweite zur Entlüftung der Luftfedern über das elektrisch steuerbare Luftauslassventil begrenzt. Durch die direkte und einseitige Druckbeaufschlagung des Ventilankers mit dem Luftdruck aus den Luftfedern, können nur sehr kleine Nennweiten bei relativ hohen Schaltkräften (entgegen der hohen Zuhaltekraft des Magneten) realisiert werden, was den Einsatzbereich stark einschränkt. Einen derartigen pneumatischen Schaltungsaufbau bezeichnet man auch als Direct-Release-Schaltung.
Der vorliegenden Erfindung liegt die Aufgabe zugrunde, eine Vorrichtung zum Betreiben eines pneumatischen Systems bereitzustellen, welche die Funktionalität einer Schnellentlüftungsschaltung (Quick-Release) mit einem einfachen, bauraumsparenden und kostengünstigen Schaltungsaufbau (Direct-Release) verbindet und das Ablassgeräusch reduziert. Gelöst wird die Aufgabe durch ein druckentlastetes Ventil zum Entlüften der Druckkammer bzw. des pneumatischen Systems gemäß Anspruch 1. Durch die Verwendung eines druckentlasteten Ventils kann auf die Verwendung eines Relaisventils verzichtet werden. Dadurch wird die Anzahl der Teile reduziert, was zum einen zu einer Gewichts- und Bauraumreduzierung führt, zum anderen aber auch die Ausfallwahrscheinlichkeit der Vorrichtung verringert. Druckentlastete Systeme zeichnen sich dadurch aus, dass auf beiden Seiten der wirksamen Flächen des Ventilkörpers derselbe Druck unabhängig von seiner Stellung herrscht. Folglich muss der Ventilkörper zum Schließen des pneumatischen Systems nicht gegen den Systemdruck bewegt werden. Die zum Schließen des Ventils benötigte Kraft ist daher unabhängig von der verwendeten Nennweite, so dass prinzipiell jede Nennweite realisiert werden kann. Dennoch können die zum Bewegen des Ventilkörpers benötigten Magnete klein gehalten und der Energieverbrauch reduziert werden. Ferner besteht die Möglichkeit, pneumatische Systeme mit unterschiedlichen Leistungen mit derselben Nennweite und damit einheitlich zu realisieren. Der erfindungsgemäßen Vorrichtung zeichnet sich dadurch aus, dass das druckentlastete Ventil als druckentlastetes Magnetventil ausgebildet ist. Hierdurch kann das Ventil in einen elektrischen Steuer- oder Regelkreis eingebunden werden. So ist es beispielsweise möglich, das druckentlastete Ventil durch ein Signal des Fahrers oder eines Sicherheitssystems schnell zu öffnen und wieder zu schließen. Ferner kann der Absenkungsprozess durch eine entsprechende Ansteuerung des druckentlasteten Ventils auch langsamer durchgeführt werden. Ein weiterer Vorteil besteht darin, dass der Magnetventilanker beidseitig, d.h. sowohl auf der Seite des Dichtsitzes als auch an der gegenüberliegenden Seite, oder vollständig von dem Druck in dem Lufttrockner und/oder der Druckkammer umgeben wird, womit die Haltekraft des Magnetventilankers der Haltefeder auf dem Dichtsitz gering gehalten werden kann und somit die Schaltkräfte gering ausfallen. Dies führt zu einem insgesamt kleiner bauenden Magnetventil, was Material, Bauraum und Kosten einspart.
Bevorzugt ist es, dass die Nennweite des druckentlasteten Magnetventils im Bereich von 2 bis 8 mm, besonders bevorzugt im Bereich von 4 bis 6 mm liegt. Erfindungsgemäß steht eine Steuereinheit mittels einer Signalleitung mit dem Magnetventil derart in Verbindung, dass die Hubhöhe eines Ventilkörpers regelbar ist, um die Durchflussmenge zu steuern. Hierdurch lässt sich die Steuerung weiter optimieren. Der Vorteil dieser Weiterbildung ist darin zu sehen, dass die geregelte Entlüftungsmenge *bedarfsgerecht* gesteuert werden kann. Z. B. kann die Absenkgeschwindigkeit bei luftgefederten Fahrzeugen je nach dem Anforderungsprofil verändert werden. Zudem ist eine Standardisierung (gleiche Gehäuse und Magnetventilausführung) für verschiedene Anwendungen möglich.

Im Hinblick auf eine Verringerung der Geräuschbelästigung wird die Schaltgeschwindigkeit des Ventilkörpers beeinflusst, insbesondere eingeschränkt, um das Ablassgeräusch zu reduzieren. Hierzu wird zu Beginn eines Entlüftungsprozesses das Magnetventil mit kurzen Impulsen angesteuert, so dass das Ventil kurz schaltet und dadurch ein begrenztes Teilöffnen des Querschnitts bewirkt wird, so dass nur ein kleiner Volumenstrom der zu entlüftenden Luft strömt. Mit dieser Maßnahme wird der Entlüftungsknall deutlich reduziert. Ist anschließend ein niedrigeres Druckniveau erreicht, wird das Ventil mit längeren Impulsen angesteuert. Die Länge der Schaltimpulse muss individuell festgelegt werden. Eine bevorzugte Weiterentwicklung der erfindungsgemäßen Vorrichtung zeichnet sich dadurch aus, dass das Magnetventil durch ein PWM-Signal oder durch eine Taktung angesteuert wird. Der Vorteil eines PWM-Signal angesteuerten Magnetventils besteht darin, dass der Entlüftungsknall durch gesteuerte Hubänderung während des Öffnens (aber auch beim Schließen) des Ventilkörpers deutlich reduziert wird und die Entlüftungsmenge während des eigentlichen Entlüftungsvorgang bedarfsgerecht gesteuert werden kann.

Bevorzugt ist es ferner, dass ein Lufttrockner in der Hauptleitung angeordnet ist. In diesem Fall ist es besonders zweckmäßig, dass die Entlüftungsleitung zwischen der Druckquelle und dem Lufttrockner von der Hauptleitung abzweigt.
Der Vorteil dieser Weiterbildung ist darin zu sehen, dass der Lufttrockner bei der Regeneration des Trockenmittels im Gegenstrom zur Förderstromrichtung durchströmt wird. Dies hat eine bessere und schnellere Regeneration des Trockenmittels zur Folge, wobei ein geringerer Volumenstrom der Luft zur Regeneration erforderlich ist.
Alternativ wird vorgeschlagen, dass die Entlüftungsleitung zwischen dem Lufttrockner und der Druckkammer von der Hauptleitung abzweigt. Der Vorteil dieser alternativen Weiterbildung ist darin zu sehen, dass die Entlüftung der Druckkammer durch den Lufttrockner geführt wird und gedrosselt erfolgen kann Der Lufttrockner kann in diesem Fall in der Strömungsrichtung regeneriert werden, in der auch die eigentliche Trocknung stattfindet. Der Regenerationsprozess des Lufttrockners ist dann solange durchzuführen, bis dieser vollständig regeneriert ist und die enthaltene Feuchtigkeit vollständig durch das Trocknerbett in die Umgebung überführt worden ist. Ein weiterer Vorteil ist darin zu sehen, dass eventuelle Emissionen aus dem Kompressor durch den Lufttrockner ausgefiltert werden und der Ablassmagnet somit gegen Versagen durch Kontaminierung von Fremdpartikeln geschützt wird.
Vorteilhafterweise wird die erfindungsgemäße Vorrichtung, bei welcher der Kompressor eine Förderrichtung aufweist, die zum pneumatischen System hin gerichtet ist, dadurch weitergebildet, dass das druckentlastete Ventil in Förderrichtung vor dem Lufttrockner im Entlüftungspfad angeordnet ist. Bei der Entlüftung des pneumatischen Systems strömt die Luftmenge gegen die Förderrichtung des Kompressors, so dass die Strömungsrichtung beim Trocknen (Fördern) und Regenerieren (Entlüften) des Lufttrockners entgegengesetzt verlaufen.

Eine bevorzugte Ausgestaltung weist eine Druckreduziervorrichtung zum Reduzieren des Drucks der Druckluft in der Vorrichtung auf. Um zu vermeiden, dass bei der Regenerierung das gesamte Luftfederungssystem entleert wird, muss der Regenerationsprozess mit einem besseren Wirkungsgrad als der Trocknungsprozess durchgeführt werden. Um dies realisieren zu können, wird die Kompressibilität der Luft ausgenutzt und die getrocknete Druckluft zur Regeneration des Granulates im Lufttrockner entspannt, also sein Volumen vergrößert, bevor sie die Granulatschüttung durchströmt und das Granulat regeneriert. Dabei ist die Druckreduzierungsvorrichtung vorzugsweise als Drossel ausgebildet. Diese sind einfach aufgebaut und robust im Betrieb, so dass Drosseln weder teure noch empfindliche Bauteile darstellen. Bei der Anordnung der Drossel innerhalb der Vorrichtung muss nur sichergestellt sein, dass die Druckluft beim Entlüften des pneumatischen Systems entspannt wird, bevor sie den Lufttrockner zum Regenerieren durchströmt.

Optional umfasst die Vorrichtung eine Hauptleitung zum Leiten der Druckluft und eine an einer ersten Stelle von der Hauptleitung abzweigende Nebenleitung, in der ein Druckbegrenzungsventil angeordnet ist. Das Druckbegrenzungsventil begrenzt den in der Vorrichtung vorliegenden Druck nach oben und sorgt dafür, dass der Druck innerhalb der Vorrichtung unabhängig von der Stellung des druckentlasteten Ventils einen bestimmten Wert nicht überschreitet, um eine Beeinträchtigung, Beschädigung oder Zerstörung der Vorrichtung und des Systems zu verhindern.

Optional umfasst die Vorrichtung eine Hauptleitung zum Leiten der Druckluft und eine an einer ersten Stelle von der Hauptleitung abzweigende und an einer zweiten Stelle in die Hauptleitung mündende Nebenleitung. Hier ist zwischen der ersten und der zweiten Stelle in der Hauptleitung ein Rückschlagventil zur Rückhaltedruckbegrenzung angeordnet. Bei Aufrechterhaltung eines bestimmten Minimaldrucks werden die Luftbälge dadurch geschont, dass diese nicht vollständig entleert und damit vollständig zusammen gefaltet werden. Dadurch reduzieren sich die Stauch- und Streckbewegungen, weshalb das Material weniger stark belastet wird. Weiterhin wird der Aufbau des Betriebsdrucks beschleunigt.

Eine weiterhin bevorzugte Ausgestaltung der erfindungsgemäßen Vorrichtung zeichnet sich dadurch aus, dass die Drossel in der Nebenleitung angeordnet ist. In dieser Anordnung ist sichergestellt, dass die Drossel nur in eine Richtung durchströmt wird. Dadurch kann die konstruktive Ausgestaltung der Drossel vereinfacht werden, wodurch sie kostengünstiger hergestellt werden kann und der Förderstrom nicht begrenzt wird.

In einer weiteren Ausgestaltung der erfindungsgemäßen Vorrichtung sind der Lufttrockner und/oder die zum druckentlasteten Ventil führende Entlüftungsleitung zwischen der ersten und der zweiten Stelle in der Hauptleitung angeordnet. Somit lassen sich die Bauteile einfacher zusammenfassen, wodurch die Vorrichtung kompakter und raumsparender gebaut werden kann.

In einer vorteilhaften Weiterentwicklung der Erfindung weisen die Hauptleitung und die Nebenleitung eine Nennweite auf, wobei die Hauptleitung und die Nebenleitung dieselbe Nennweite, insbesondere von 4 mm oder größer aufweisen. Als Nennweiten werden in diesem Zusammenhang der durchströmte Durchmesser der Haupt- und Nebenleitungen verstanden. Nennweiten von dieser Größe lassen sich nicht mit konventionellen Ventilen realisieren. Um den Absenkungsprozess des Fahrzeugaufbaus auf die gewünschte Zeit zu reduzieren, ist eine Nennweite von mindestens 4 mm erforderlich, was mit der erfindungsgemäßen Schaltung problemlos zu realisieren ist.

Vorzugsweise umfasst die erfindungsgemäße Vorrichtung ein Mittel zum Reduzieren der Geräuschentwicklung im Betrieb der Vorrichtung, insbesondere einen Schalldämpfer. Insbesondere beim Schalten der Vorrichtung in die entlüftende Stellung können starke Geräusche auftreten, die den Betrieb der Vorrichtung unangenehm und störend machen. Mithilfe eines entsprechenden Mittels zum Reduzieren der Geräuschentwicklung insbesondere in diesem Betriebszustand wird der Betrieb der Vorrichtung für die Umwelt schonender und komfortabler. Schalldämpfer haben sich in diesem Zusammenhang als ein probates und effektives Mittel herausgestellt und sind in den gewünschten Größen und Stückzahlen erhältlich, so dass hier kein nennenswerter zusätzlicher konstruktiver Aufwand notwendig ist.
In einer weiterhin bevorzugten Ausgestaltung der Erfindung umfasst die Vorrichtung einen Filter zum Filtern der Druckluft. Im Betrieb der Fahrzeuge im Gelände saugt der Kompressor Luft an, die einen erhöhten Anteil von Staubpartikeln enthält, welcher zu einer Beeinträchtigung oder gar zu einer Zerstörung der Bauteile der Vorrichtung, insbesondere der Dichtungen und der bewegten Bauteile, führen kann. Weiterhin kann sich im Betrieb des Luftfederungssystems Abrieb bilden, der sich ebenfalls nachteilig auf die Funktionsfähigkeit der Bauteile auswirkt. Durch das Vorsehen eines Filters wird verhindert, dass der Staub in die Vorrichtung eintreten und der Abrieb innerhalb der Vorrichtung unkontrolliert bewegt wird. Die Zuverlässigkeit und die Lebensdauer der Vorrichtung werden dadurch gesteigert.
Gemäß einer Weiterbildung der Erfindung ist vorgesehen, dass das druckentlastete Ventil einen Druckraum aufweist, welcher in einem ersten, geschlossenen, Zustand des druckentlasteten Ventils mit einem Eingang in Verbindung steht und in einem zweiten, offenen, Zustand mit einem Eingang und einem Ausgang in Verbindung steht. Der Vorteil dieser Weiterbildung ist darin zu sehen, dass beide Ankerseiten gleiche Druckverhältnisse aufweisen. Die aufzubringende Magnetkraft muss lediglich größer als die Summe der Reibkraft der dynamischen Ankerdichtungen und der Federkraft ausgelegt sein. Die Magnetspule kann infolgedessen im Vergleich zu den bekannten nicht druckausgleichenden Ventilen sehr klein und damit preiswert ausgeführt werden. Zudem sind große Nennweiten unabhängig vom Systemdruck realisierbar.
Gemäß einer Weiterbildung der Erfindung ist vorgesehen, dass der Druckraum und der Eingang über eine Druckentlastungsleitung in Verbindung stehen. Der Vorteil dieser Weiterbildung ist darin zu sehen, dass beide Ankerseiten gleiche Druckverhältnisse aufweisen (s. o.).

Gemäß einer Weiterbildung der Erfindung ist vorgesehen, dass die Druckentlastungsleitung innerhalb eines Ventilkörpers des druckentlasteten Ventils angeordnet ist. Der Vorteil dieser Weiterbildung ist darin zu sehen, dass keine weitere zusätzliche außen liegende (abzudichtende) Leitung erforderlich ist. Zudem bleibt die Baugröße unverändert kompakt.

Gemäß einer Weiterbildung der Erfindung ist vorgesehen, dass die Druckentlastungsleitung innerhalb eines Gehäuses des druckentlasteten Ventils angeordnet ist. Der Vorteil dieser Weiterbildung ist darin zu sehen, dass keine weitere zusätzliche außen liegende (abzudichtende) Leitung erforderlich ist.

Gemäß eines weiteren Aspektes der vorliegenden Erfindung wird die Aufgabe gelöst durch ein Verfahren zum Entlüften eines pneumatischen Systems, wobei von einer Steuereinheit über eine Signalleitung ein Entlüftungsventil in einer Entlüftungsleitung angesteuert wird und eine Durchflussmenge des Entlüftungsventils regelbar und/oder steuerbar ist. Der Vorteil der Erfindung ist darin zu sehen, dass die Entlüftungscharakteristik des Entlüftungsventils gezielt beeinflusst werden kann. Dabei ist es beispielsweise möglich, zu Beginn der Entlüftung für einen vorbestimmten ersten Zeitraum einen geringen Durchflussquerschnitt freizugeben und nach diesem ersten Zeitraum für einen vorbestimmten zweiten Zeitraum einen größeren Durchflussquerschnitt freizugeben. Dadurch lässt sich die Regeneration des Trockenmittels des Lufttrockners beeinflussen und insbesondere verbessern, wenn z.B. der erste Zeitraum so gewählt wird, dass die erforderliche Regenerationsmenge durch den Lufttrockner geführt wird und der zweite Zeitraum für eine schnellere Absenkung des Fahrzeugniveaus eingesetzt wird, um den Bedienkomfort der Niveauregelanlage zu verbessern. Es ist aber auch möglich, dies genau andersherum zu machen, indem der freigegebene Durchflussquerschnitt des Entlüftungsventils im ersten Zeitraum größer gewählt wird, als im zweiten Zeitraum. Hierdurch würde man dem Bedienkomfort eine höhere Priorität zuweisen als der Regeneration des Lufttrockners, welche erst am Ende des Niveauregelvorganges und/oder nach dem Niveauregelvorgang im zweiten Zeitraum durch einen geringeren Durchflussquerschnitt des Entlüftungsventils zum Tragen kommt. Der wesentliche Vorteil ist darin zu sehen, dass die Durchflussmenge des Entlüftungsventils an die benötigte Absenkgeschwindigkeit des Fahrzeugniveaus und/oder an eine optimierte Regeneration des Lufttrockners anpassbar ist. Ein weiterer Vorteil ist darin zu sehen, dass das Entlüftungsgeräusch gezielt beeinflusst - insbesondere reduziert - werden kann. Erfindungsgemäß ist vorgesehen, dass die Durchflussmenge des Entlüftungsventils in Abhängigkeit von der Schaltfrequenz des Ventilkörpers regelbar und/oder steuerbar ist, um das Ablassgeräusch zu reduzieren. Der Vorteil der Erfindung ist darin zu sehen, dass der Entlüftungsknall durch langsame Hubänderung während des Öffnens und/oder beim Schließen des Ventilkörpers deutlich reduziert wird und die Entlüftungsmenge während des eigentlichen Entlüftungsvorganges bedarfsgerecht gesteuert wird. Gemäß einer Weiterbildung der Erfindung ist vorgesehen, dass die Durchflussmenge des Entlüftungsventils in Abhängigkeit von einer Öffnungszeit tₒ des Entlüftungsventils regelbar und/oder steuerbar ist, um das Ablassgeräusch zu reduzieren. Der Vorteil dieser Weiterbildung ist darin zu sehen, dass der Entlüftungsknall durch langsame Hubänderung während des Öffnens und/oder beim Schließen des Ventilkörpers deutlich reduziert wird und die Entlüftungsmenge während des eigentlichen Entlüftungsvorganges bedarfsgerecht gesteuert wird.

Gemäß einer Weiterbildung der Erfindung ist vorgesehen, dass die Durchflussmenge des Entlüftungsventils in Abhängigkeit von einer Ablasscharakteristik des pneumatischen Systems regelbar und/oder steuerbar ist. Der Vorteil dieser Weiterbildung ist darin zu sehen, dass die Entlüftungsmenge während des eigentlichen Entlüftungsvorgangs bedarfsgerecht gesteuert werden kann.

Gemäß einer Weiterbildung der Erfindung ist vorgesehen, dass die Durchflussmenge des Entlüftungsventils in Abhängigkeit von einem PWM -Signal und/oder einer Strom-Taktung und/oder einer Spannungs-Taktung regelbar und/oder steuerbar ist. Der Vorteil dieser Weiterbildung ist darin zu sehen, dass zu Beginn des Entlüftungsprozesses das Magnetventil mit kurzen Impulsen angesteuert (Bereich A) wird. Die Impulslänge ist dabei so auszulegen, dass der Magnetstrom die Schaltschwelle, zum Beispiel den erforderlichen Schaltstrom, erreicht, damit das Ventil kurz schaltet. Das bewirkt ein leichtes Öffnen, so dass nur ein kleiner Volumenstrom der zu entlüftenden Luft strömt. Diese Impulse werden so oft wiederholt, bis ein niedrigeres Druckniveau erreicht ist und das Ventil mit der Ansteuerung durch längere Impulse (Bereich B), bei denen der Magnetstrom über der Schaltschwelle liegt, geöffnet werden kann, beziehungsweise offen gehalten werden kann.

Durch diese Ansteuerung kann der Entlüftungsknall, der bei der Entlüftung durch hohe Druckdifferenzen entsteht, vermieden werden.

Die Länge der Schaltimpulse muss individuell festgelegt werden, da diese von der Bauart, den magnetischen und elektrischen Eigenschaften abhängen.

Hinsichtlich der hierdurch erzielten weiteren Vorteile des Verfahrens wird auf die obigen Beschreibungen zu der erfindungsgemäßen Vorrichtung Bezug genommen.
Vorteilhafte Ausgestaltungen der erfindungsgemäßen Vorrichtung werden anhand der nachfolgenden Zeichnungen im Detail beschrieben. Es zeigen
Fig. 1 eine erste Ausgestaltung der erfindungsgemäßen Vorrichtung,
Fig. 2 eine zweite Ausgestaltung der erfindungsgemäßen Vorrichtung,
Fig. 3 eine dritte Ausgestaltung der erfindungsgemäßen Vorrichtung,
Fig. 4 eine schematische Darstellung eines druckbelasteten Magnetventils,
Fig. 5 eine erste schematische Darstellung eines druckentlasteten Magnetventils,
Fig.6 eine zweite schematische Darstellung eines druckentlasteten Magnetventils,
Fig.7 den zeitlichen Verlauf der Schalttätigkeit eines Magnetventils.

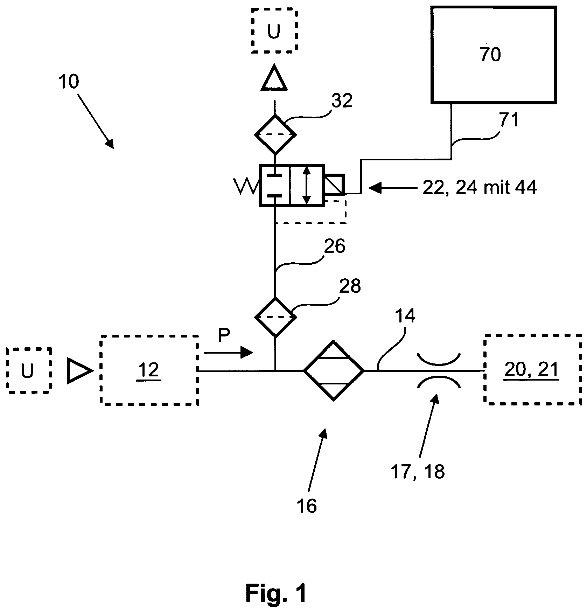

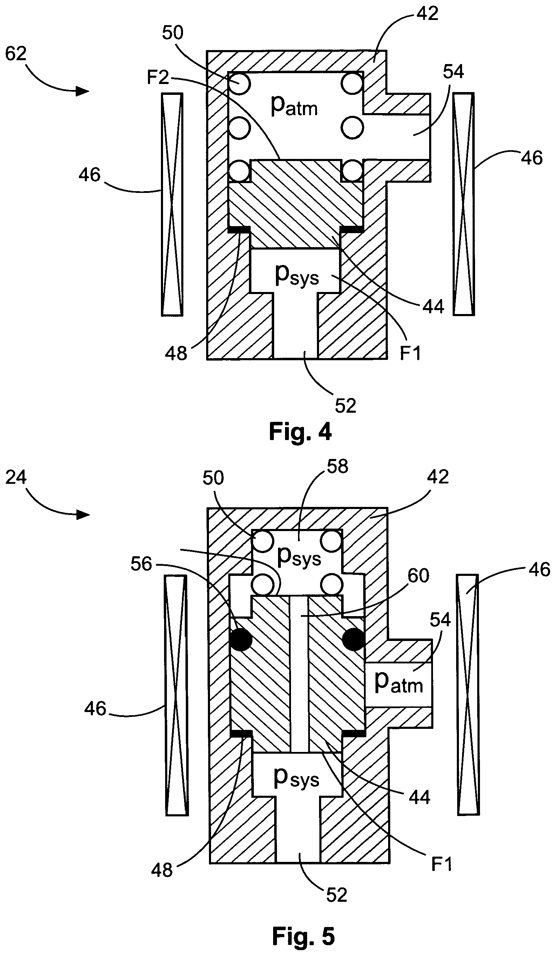

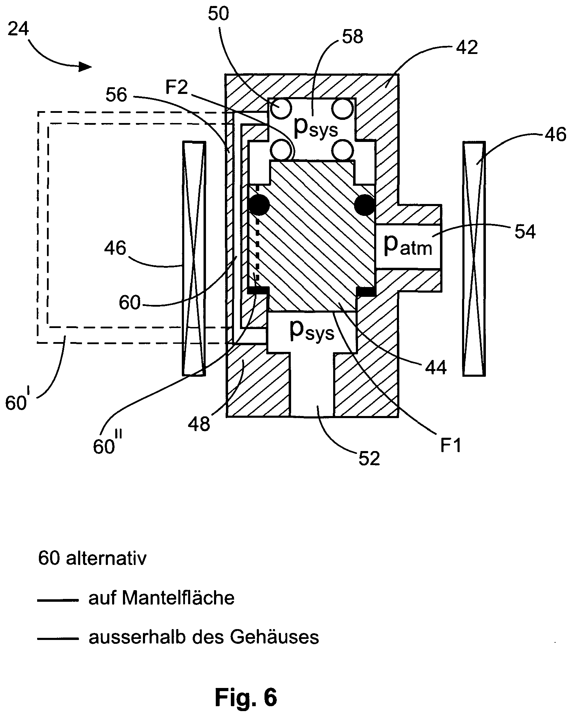

Die in Figur 1 dargestellte Ausgestaltung der erfindungsgemäßen Vorrichtung 10 umfasst einen Kompressor, der eine Druckquelle 12 zum Fördern und Erzeugen von Druckluft bildet, der über eine Hauptleitung 14 mit einem optionalen Lufttrockner 16 zum Trocknen der Druckluft verbunden ist. Weiterhin ist eine Drossel 17,18 zum Entspannen der Druckluft in der Hauptleitung 14 angeordnet. Die Hauptleitung 14 mündet in ein nicht näher dargestelltes pneumatisches System mit einer Druckkammer 20, beispielsweise eine Luftfederungsanlage 21, ebenfalls nicht näher dargestellt. Die Anwendung der erfindungsgemäßen Vorrichtung ist dabei nicht auf bestimmte pneumatische Systeme, wie eine Luftfederungsanlage, beschränkt. Zwischen dem Kompressor 12 und dem Lufttrockner 16 ist ein druckentlastetes Entlüftungs-Ventil 22, im dargestellten Beispiel als druckentlastetes Magnetventil 24 ausgeführt, angeordnet. Hierzu zweigt eine Entlüftungsleitung 26 zwischen dem Kompressor 12 und dem Lufttrockner 16 von der Hauptleitung 14 ab. Alternativ kann aber das druckentlastete Magnetventil 24 direkt in die Hauptleitung 14 eingebaut sein, so dass auf die Entlüftungsleitung 26 verzichtet werden kann. Die Druckentlastung des druckentlasteten Ventils 22 bzw. des druckentlasteten Magnetventils 24 erfolgt über eine Druckentlastungsleitung 60, welche in den Figuren 5 und 6 näher erläutert wird.

Zum Betreiben des pneumatischen Systems 20, hier exemplarisch die Luftfederungsanlage 21, saugt der Kompressor 12 als ein Beispiel einer Druckquelle Luft aus der Umgebung U der Vorrichtung 10 an und verdichtet diese Luft auf einen Druck von etwa 5 bis 20 bar (Verdichtungs- und Förderphase), wobei das der Erfindung zugrunde liegende Prinzip nicht auf diesen Druckbereich beschränkt ist. Die verdichtete Luft wird in die Hauptleitung 14 eingeleitet und in die mit dem Pfeil P angedeutete Richtung gefördert. Das druckentlastete Magnetventil 24 ist als ein "normal geschlossenes" bzw. "normally closed", Ventil ausgeführt, ist also im stromlosen Zustand geschlossen, so dass verhindert wird, dass der Kompressor 12 die verdichtete Luft bei nicht geschaltetem Magnetventil 24 in die Umgebung U befördert. Grundsätzlich wäre es auch denkbar, das Ventil 22, 24 als "normally open" auszuführen, dann müsste allerdings das Ventil 22, 24 während der Verdichtungsphase geschlossen gehalten werden. Das Magnetventil wird über eine Steuer- bzw. Signalleitung 71 von einer Steuereinheit 70 geschaltet und betrieben.

Die Druckluft wird nun durch den optionalen Lufttrockner 16 geführt, wo sie in bekannter Weise durch eine nicht dargestellte Granulatschüttung (Trockenmittel) strömt, an welche sich die in der Druckluft enthaltene Feuchtigkeit anlagert bzw. von dem Trockenmittel adsorbiert wird. Anschließend passiert die Druckluft die Drossel 18 und mündet in die Luftfederungsanlage 21, wo sie zum Beispiel in nicht dargestellten Luftbalgen verwendet wird. In diesem Fall ist die Drossel 18 so ausgeführt, dass die Druckluft nicht entspannt wird, wenn sie die Drossel 18 in die durch den Pfeil P gekennzeichnete Richtung durchquert.)

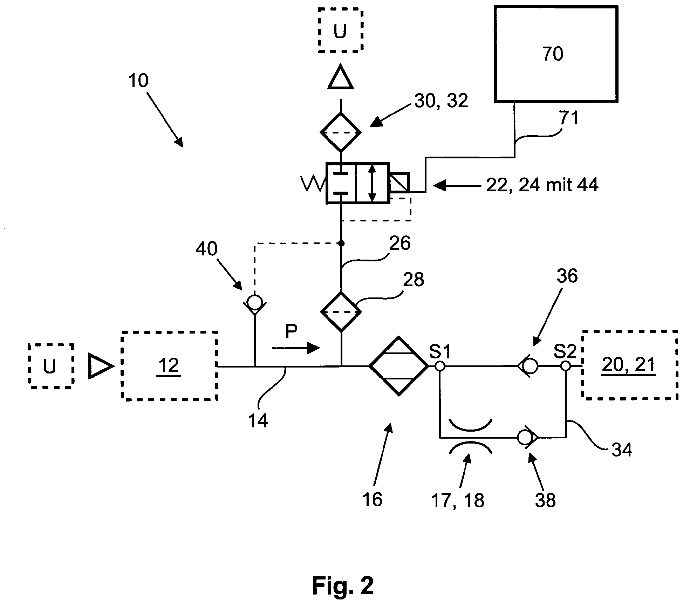

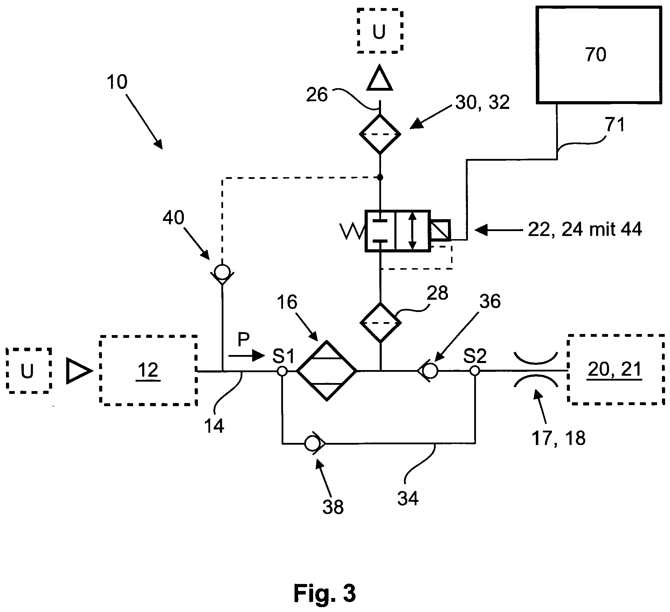

Soll nun die Luftfederungsanlage 21 entlüftet werden (Entlüftungsphase), so wird mittels eines entsprechenden Signals die Förderung des Kompressors 12 eingestellt und mittels eines weiteren Signals über die Signalleitung 71 das druckentlastete Magnetventil 24 durch die Steuereinheit 70 in den zweiten Schaltzustand überführt (geschaltet) und damit geöffnet, so dass die Druckluft an die Umgebung U abgegeben wird. Dazu strömt die Druckluft gegen die durch den Pfeil P angedeutete Richtung aus der Luftfederungsanlage 21 bzw. Druckkammer 20 durch die Drossel 18, wo sie entspannt wird, d.h. der Druck der Luft wird reduziert und das Volumen der Luft wird vergrößert. Anschließend durchströmt die entspannte Druckluft in im Vergleich zur Trocknung umgekehrter Richtung die Granulatschüttung des Lufttrockners 16. Die in der Granulatschüttung enthaltene Feuchtigkeit wird von der entspannten Druckluft aufgenommen und der Lufttrockner 16 regeneriert. Nachdem die entspannte Druckluft den Lufttrockner 16 durchquert hat, wird sie weiter durch die Entlüftungsleitung 26 und durch das druckentlastete Magnetventil 24 geleitet und an die Umgebung U der Vorrichtung 10 abgegeben. Die Bauelemente wie z.B. ein Filter 28 zur Reinigung der (angesaugten und/oder) abgelassenen Luft, ein Mittel 30 zum Reduzieren der Geräuschentwicklung im Betrieb der Vorrichtung 10, ein Schalldämpfer 32 zur Reduzierung der (Ansaug- und/oder) Ablassgeräusche der Vorrichtung 10 und ein Druckbegrenzungsventil 40 (s.Fig.2 und 3) zur Begrenzung des Maximaldrucks in der Vorrichtung 10 bzw. der Druckkammer 20 des pneumatischen Systems oder der Luftfederungsanlage 21 können optional integriert werden.

Die Figur 2 stellt eine Weiterentwicklung der Figur 1 dar, wobei alle zusätzlichen Bauelemente der Figur 2 einzeln oder insgesamt auch in der Figur 1 angeordnet und verwendet werden können. In Bezug auf die Beschreibung der gleichen Bauelemente der Figur 2 wird auf die Beschreibung der Figur 1 verwiesen. In Figur 2 ist eine zweite Ausführungsform der erfindungsgemäßen Vorrichtung 10 dargestellt. Diese umfasst den Kompressor 12, der wiederum in die Hauptleitung 14 mündet. In der von der Hauptleitung 14 abzweigenden Entlüftungsleitung 26 ist ein Filter 28, das druckentlastete Magnetventil 24 und ein Mittel 30 zum Reduzieren der Geräuschentwicklung im Betrieb der Vorrichtung 10, beispielsweise ein Schalldämpfer 32 angeordnet. Weiter in der durch den Pfeil P angedeuteten Richtung befindet sich der Lufttrockner 16, gefolgt von einer ersten Stelle S1, an der eine Nebenleitung 34 von der Hauptleitung 14 abzweigt und an einer zweiten Stelle S2 wieder in die Hauptleitung 14 einmündet. Zwischen der ersten und der zweiten Stelle S2 ist in der Hauptleitung 14 ein in Richtung von der ersten Stelle S1 zu der zweiten Stelle S2 beispielsweise einer Druckkammer 20 bzw. Luftfederungsanlage 21 öffnendes Rückschlagventil 36 angeordnet. In der Nebenleitung 34 befinden sich die Drossel 18 und ein in Richtung von der zweiten Stelle S2 zu der ersten Stelle S1 bzw. dem Kompressor 12 öffnendes Rückschlagventil 38, welches den Druck in der Druckkammer 20 oder dem Verbraucher, z.B. einer Luftfederungsanlage 21, innerhalb eines wählbaren Bereichs hält (Minimaldruckhaltefunktion), wobei die Drossel 18 und das Rückschlagventil 38 in einer beliebigen Reihenfolge angeordnet werden kann. In der durch den Pfeil P gekennzeichneten Richtung hinter der zweiten Stelle S2 schließt sich das pneumatische System bzw. die Druckammer 20, in diesem Fall die Luftfederungsanlage 21 an. Zwischen dem Kompressor 12 und dem Lufttrockner 16 ist ein weiteres Druckbegrenzungsventil 40 in der Hauptleitung 14 angeordnet bzw. zweigt an dieser Stelle von der Hauptleitung 14 ab. Dieses könnte auch in der Hauptleitung 14 nach dem Lufttrockner 16 platziert sein. Druckbegrenzungsventil 40 und Leitung 26 können optional miteinander verbunden sein, insbesondere wenn die durch das Druckbegrenzungsventil 40 geleitete Luft durch den optionalen Schalldämpfer 32 geführt wird. Die Bauelemente wie z.B. ein Filter 28 zur Reinigung der angesaugt und/oder abgelassenen Luft, ein Mittel 30 zum Reduzieren der Geräuschentwicklung im Betrieb der Vorrichtung 10, ein Schalldämpfer 32 zur Reduzierung der Ansaug- und/oder Ablassgeräusche der Vorrichtung 10 und ein Druckbegrenzungsventil 40 (s.Fig.2 und 3) zur Begrenzung des Maximaldrucks in der Vorrichtung 10 bzw. der Druckkammer 20 des pneumatischen Systems oder der Luftfederungsanlage 21 können optional integriert werden.

Zum Betrieb der Vorrichtung 10 fördert der Kompressor 12 die verdichtete Luft in Richtung des Lufttrockners 16. Das weitere Druckbegrenzungsventil 40 ist so eingestellt, dass es erst dann öffnet, wenn der Druck in der Vorrichtung 10 einen kritischen Wert, z.B. den maximal zulässigen Druckwert, überschritten hat. Dieser kritische Wert wird im Normalbetrieb der Vorrichtung 10 nicht erreicht, so dass die Druckluft die Vorrichtung 10 nicht über das weitere Druckbegrenzungsventil 40 verlassen kann. Das druckentlastete Magnetventil 24 mit der Druckentlastungsleitung 60 ist ebenfalls geschlossen. Die Druckluft strömt weiter entlang der Hauptleitung 14 durch das Rückschlagventil 36, welches so eingestellt ist, dass es den Durchfluss in die durch den Pfeil P gekennzeichnete Richtung freigibt. Die Druckluft mündet dann in die Luftfederungsanlage 21, wo sie weiter verwendet wird. Das Druckbegrenzungsventil 38 in der Nebenleitung 34 hat weiterhin die Funktion eines von der zweiten Stelle S2 zur ersten Stelle S1 öffnenden Rückschlagventils 36. Dies hat zur Folge, dass die Druckluft bei der Förderung der Druckluft zum pneumatischen System 20 die Nebenleitung 34 nicht durchläuft, also wenn die Förderung der Druckluft in Richtung des Pfeils P erfolgt.

Zum Entlüften der Luftfederungsanlage 21 stellt der Kompressor 12 die Erzeugung von Druckluft ein und das druckentlastete Magnetventil 24 wird mittels eines entsprechenden Signals von der Steuereinheit 70 über die Signalleitung 71 in den zweiten Schaltzustand überführt und damit geöffnet, so dass die sich in der Luftfederungsanlage 21 befindende Druckluft gegen die durch den Pfeil P gekennzeichnete Richtung durch die Vorrichtung 10 strömt. Wegen des Rückschlagventils 36 kann die Druckluft aber nur den Weg über die Nebenleitung 34 nehmen, in der sie das Druckbegrenzungsventil 38 und die Drossel 18 durchläuft. Das Rückschlagventil 38 ist im dargestellten Beispiel mit einer minimalen Druckhaltungsfunktion ausgestattet, so dass es erst dann schließt, wenn ein gewisser Mindestdruck bzw. Minimaldruck, der etwas über dem atmosphärischen Druck liegt, unterschritten wird. Somit wird verhindert, dass sich die Luftfederungsanlage 21 völlig entleert. Mit Durchlaufen der Drossel 18 wird die Druckluft entspannt und regeneriert anschließend auf die oben beschriebene Weise den Lufttrockner 16 (s. Beschreibung zur Figur 1). Weiterhin fließt die entspannte Druckluft durch die Entlüftungsleitung 26 der Hauptleitung 14, wo sie mithilfe des Filters 28 gesäubert wird, bevor sie in das druckentlastete Magnetventil 24 mündet. Bevor die entspannte Druckluft in die Umgebung U der Vorrichtung 10 abgegeben wird, durchläuft sie noch den Schalldämpfer 32.

Die Figur 3 stellt eine Weiterentwicklung bzw. Abwandlung der Figuren 1 und 2 dar, wobei alle zusätzlichen Bauelemente der Figur 3 einzeln oder insgesamt auch in den Figuren 1 und 2 angeordnet und verwendet werden können. In Bezug auf die Beschreibung der gleichen Bauelemente der Figur 3 wird auf die Beschreibung der Figuren 1 und 2 verwiesen. In Figur 3 ist eine dritte Ausgestaltung der erfindungsgemäßen Vorrichtung 10 dargestellt. Im Unterschied zu der in Figur 2 beschriebenen Ausgestaltung zweigt die Entlüftungsleitung 26 zwischen der ersten Stelle S1 und der zweiten Stelle S2 von der Hauptleitung 14 ab. Weiterhin befinden sich der Lufttrockner 16 zwischen der ersten Stelle S1 und der zweiten Stelle S2 in der Hauptleitung 14 und die Drossel 18 zwischen der zweiten Stelle S2 und der Druckkammer 20 des pneumatischen Systems ebenfalls in der Hauptleitung 14. Diese Schaltungsanordnung, insbesondere der Entlüftungsleitung 26, hat die Folge, dass der Lufttrockner 16 beim Trocknen der Druckluft sowie beim Regenerieren in derselben Richtung (Richtung, die durch den Pfeil P angedeutet wird) durchströmt wird. Die Bauelemente wie z.B. das Rückschlagventil 36, die Nebenleitung 34, das Druckbegrenzungsventil 38, das Filterelement 28, das Mittel 30 zur Geräuschreduzierung, der Schalldämpfer 32 und/oder das weitere Druckbegrenzungsventil 40 können optional integriert werden.

Die Steuereinheit 70 steht mittels einer Signalleitung 71 mit dem druckentlasteten Magnetventil 24, welches eine Druckentlastungsleitung 60 aufweist, derart in Verbindung, dass die Hubhöhe eines Ventilkörpers 44 des Magnetventils 24 regelbar ist, um die Durchflussmenge zu steuern. Die Ansteuerung erfolgt über ein PWM -Signal oder eine Strom- oder Spannungstaktung. Des Weiteren kann durch die beschriebene Ansteuerung die Schaltgeschwindigkeit tᵥ des Ventilkörpers 44 derart beeinflusst wird, insbesondere eingeschränkt werden, um das Ablassgeräusch zu reduzieren.

In Figur 4 ist der prinzipielle Aufbau eines druckbelasteten Magnetventils 62 dargestellt. Dieses umfasst ein Gehäuse 42, einen Eingang 52, an dem sich das nicht dargestellte pneumatische System bzw. die Druckkammer 20 oder die Luftfederungsanlage 21 anschließt, und einen Ausgang 54, der mit der Umgebung U kommuniziert. Im Inneren des Gehäuses 42 ist ein mit einer Feder 50 belasteter Ventilkörper 44 bewegbar angeordnet. Im stromlosen Zustand drückt die Feder 50 den Ventilkörper 44 gegen eine statische Dichtung 48, so dass kein Fluid, in diesem Fall Druckluft, vom Eingang 52 zum Ausgang 54 strömen kann. Wird die Magnetspule 46 bestromt, zieht sie den Ventilkörper 44 von den statischen Dichtungen weg, so dass der Fluss für die Druckluft durch das druckbelastete Magnetventil 62 freigegeben wird, wobei das Magnetventil 62 in seinen zweiten Schaltzustand überführt wird. Es handelt sich im dargestellten Beispiel um ein "normal geschlossenes" bzw. "normally closed" Ventil. Um den Fluss durch das druckbelastete Magnetventil 62 wieder zu schließen, wird die Bestromung der Magnetspule 46 eingestellt, so dass das Magnetventil in seinen ersten Schaltzustand überführt wird.

Bei dem druckbelasteten Magnetventilen 62 wirkt auf der dem Eingang 52 zugewandten Fläche F₁ des Ventilkörpers 44 der Systemdruck p_{sys}, während auf der abgewandten Fläche F2 der atmosphärische Druck pₐₜₘ wirkt. Aus diesem Grund muss die Feder 50 so dimensioniert sein, dass sie eine Kraft auf den Ventilkörper 44 aufbringen kann, die groß genug ist, um ihn gegen die durch den Systemdruck p_{sys} aufgeprägte Kraft auf dem Dichtsitz halten zu können. Die Magnetspule 46 ist so groß zu dimensionieren, dass die Kraft der Feder 50 überwunden werden kann und der Magnetventilanker 44 in den zweiten Schaltzustand überführt wird. Mit steigenden Nennweiten und steigendem Systemdruck p_{sys} bzw. der Druckdifferenz zwischen dem atmosphärischen Druck pₐₜₘ und dem Systemdruck p_{sys} steigt auch die Kraft, die auf die Fläche F1 des Ventilkörpers 44 wirkt. Folglich muss sowohl die Feder 50 als auch die Magnetspule 46 größer dimensioniert werden, was zum einen zu einem erhöhten Bauraumbedarf führt, zum anderen auch zu einer Verkomplizierung der benötigten Elektronik zum Steuern der Magnetspule 46 führen kann.

In Figur 5 ist der prinzipielle Aufbau eines druckentlasteten Magnetventils 24 dargestellt. Im Unterschied zu dem in Figur 4 dargestellten druckbelasteten Magnetventil 62 befindet sich über der dem Eingang 52 abgewandten Fläche F2 des Ventilkörpers 44 ein durch mindestens eine dynamische Dichtung 56 abgedichteter Druckraum 58, der im dargestellten Beispiel mittels eines Druckentlastungskanals 60 im Ventilkörper 44 des druckentlasteten Magnetventils 24 über den Eingang 52 mit der Entlüftungsleitung 26 des pneumatischen Systems bzw. der Druckkammer 20 oder der Luftfederungsanlage 21 kommunizierend verbunden ist. Ist darüber hinaus die dem Eingang 52 zugewandte Fläche F1 des Ventilkörpers 44 gleichgroß wie die Fläche F2, muss die Magnetspule 46 nur noch so ausgelegt werden, dass die Widerstandskraft der dynamischen Dichtungen 56 und die Vorspannkraft der Feder 50 überwunden wird. Die Auslegung des Magnetventils 24 ist dann unabhängig von der verwendeten Nennweite und der Druckdifferenz zwischen dem atmosphärischen Druck pₐₜₘ und dem Systemdruck p_{sys}.

Eine andere Ausführungsform eines druckentlasteten Ventils 22 wird in der Figur 6 dargestellt. Das druckentlastete Magnetventil 24 der Figur 6 weist auf der Mantelfläche des Ventilkörpers 44 einen Druckentlastungskanal 60^{II} zur Herstellung der Kommunikation zwischen dem Druckraum 58 und dem Eingang 52 des pneumatischen Systems bzw. der Druckkammer 20 oder der Luftfederungsanlage 21 auf. Es ist aber auch möglich den Druckentlastungskanal 60 außerhalb des Gehäuses 42 des druckentlasteten Magnetventil 24 anzuordnen. In Figur 6 ist dieser externe, außerhalb des Gehäuses 42 liegende Druckentlastungskanal 60^{I} gestrichelt eingezeichnet. Durch den Druckentlastungskanal 60 im Gehäuse 42 selbst oder außerhalb des Gehäuses 42, oder am bzw. im Ventilkörper 44 ist sichergestellt, dass im Druckraum 58 derselbe Druck p_{sys} herrscht wie im Eingang 52 des pneumatischen Systems bzw. der Druckkammer 20 oder der Luftfederungsanlage 21. Ist darüber hinaus die dem Eingang 52 zugewandte Fläche F1 des Ventilkörpers 44 gleichgroß wie die Fläche F2, muss die Magnetspule 46 nur noch so ausgelegt werden, dass die Widerstandskraft der dynamischen Dichtungen 56 und die Vorspannkraft der Feder 50 überwunden wird. Die Auslegung des Magnetventils 24 ist dann unabhängig von der verwendeten Nennweite und der Druckdifferenz zwischen dem atmosphärischen Druck pₐₜₘ und dem Systemdruck p_{sys}.

Die Fig. 6 zeigt eine geringfügige Abwandlung des druckentlasteten Magnetventils 24 der Fig. 5 in schematische Darstellung, wobei im Weiteren nur diese Abwandlung näher beschrieben wird. Die Abwandlung betrifft die Anordnung des druckentlasteten Kanals 60, welcher in diesem Ausführungsbeispiel der Fig. 6 innerhalb des Gehäuses 42 angeordnet ist und somit den Eingang 52 mit dem Druckraum 58 verbindet. In Figur 6 ist ferner eine weitere alternative Anordnung des Druckentlastungskanals 60 dargestellt, welcher alternativ an einer Mantelfläche des Ventilkörpers 44 angeordnet sein kann, wie durch die Bezeichnung 60^{II} angedeutet ist, oder außerhalb des Gehäuses 42, angedeutet durch Bezugszeichen 60'.

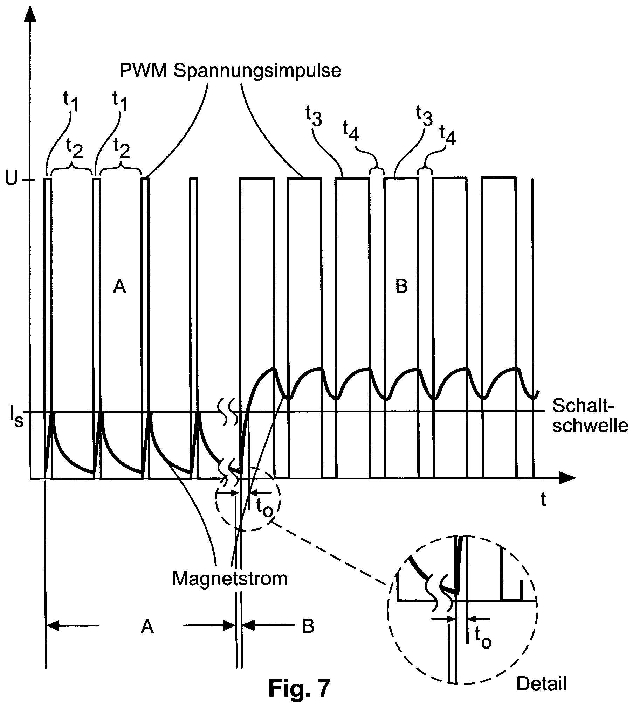

Die Figur 7 zeigt exemplarisch den zeitlichen Verlauf des Schaltverhaltens des Magnetventils 24. Die angelegte elektrische Spannung U und der Magnet-Strom I in dem Magnetventil 24 sind qualitativ über der Zeit t aufgetragen. Zu Beginn eines Entlüftungsprozesses wird das Magnetventil 24 mit kurzen Impulsen im Bereich A angesteuert, deren zeitliche Längen in der Zeichnung als t₁ dargestellt sind. Zwischen den einzelnen Impulsen während der Zeiten t₁ sind Schaltpausen t₂ vorgesehen. Die Impulslänge t₁ ist dabei so auszulegen, dass der Magnet-Strom I eine Schaltschwelle, d. h. den erforderlichen Schaltstrom Iₛ erreicht, damit das Magnetventil 24 kurz schaltet. Die Zeitspanne von dem Beginn eines Spannungsimpulses bis zum Erreichen des Schaltstroms Is wird als Öffnungszeit t₀ bezeichnet: eine Öffnungszeit t₀ ist exemplarisch in Fig. 7 eingetragen. Das kurze Schalten bewirkt ein begrenztes Teilöffnen, so dass nur ein relativ kleiner Volumenstrom der zu entlüftenden Luft als erhöhte Leckage durch das Magnetventil 24 strömt. Die Impulse t₁ werden so oft wiederholt, bis ein niedrigeres Druckniveau innerhalb des Druckraumes erreicht ist. Der statische Öffnungsdruck wird reduziert. Anschließend kann in einer zweiten Phase gemäß Bereich B das Magnetventil 24 durch längere Impulse, Intervalle t₃, angesteuert werden, so dass das Magnetventil 24 den vollen Querschnitt freigibt bzw. komplett geöffnet wird. Die Zeiten zwischen den Impulsen t₃ sind mit t₄ bezeichnet. In der zweiten, durch den Bereich B veranschaulichten Phase wird also eine anderes Verhältnis zwischen den Impulsen t₃ und den Pausen-Zeiten t₄ zwischen den Impulsen t₃ eingestellt. Durch diese Art der Ansteuerung kann ein Entlüftungsknall reduziert bzw. vermieden werden, welcher bei einer Entlüftung durch hohe Druckdifferenzen entstehen würde. Die Länge der SchaltImpulse t₁, t₃ muss individuell festgelegt werden, da diese von der Bauart und den magnetischen und elektrischen Eigenschaften im Detail abhängen. Aus der Schalthäufigkeit der Spannungsimpulse ergibt sich die Schaltfrequenz. Durch eine Veränderung dieser Schaltfrequenz ist die Dauer der Entlüftung regelbar. Je höher die Schaltfrequenz ist, desto schneller entlüftet die Anlage. Die Zeiten der Impulse werden im Rahmen der Pulsweitenmodulierung (PWM) jeweils in Abhängigkeit von der PWM-Frequenz vorzugsweise wie folgt gewählt: t₁ + t₂ = t₃ + t₄

Die Erfindung ist anhand von Ausführungsbeispielen exemplarisch dargestellt worden. Dabei ergeben sich für den Fachmann offensichtliche und naheliegende Variationsmöglichkeiten. So könnten die einzelnen Elemente der Vorrichtung auch in einer anderen Reihenfolge als der dargestellten angeordnet sein. Weiterhin könnten weitere Drosseln oder Rückschlagventile vorgesehen sein.

Die Darstellungen des druckentlasteten Ventils stellen jeweils nur eine exemplarische Ausführung dar. Es sind generell alle bekannten Ausführungsformen gemäß des heutigen Standes der Technik anwendbar.

**Bezugszeichenliste (Bestandteil der Beschreibung)**

| | |
|---|---|
| U | Umgebung |
| P | Pfeil |
| S1 | Erste Stelle |
| S2 | Zweite Stelle |
| F1 | Zugewandte Fläche |
| F2 | Abgewandte Fläche |
| 10 | Vorrichtung |
| 12 | Kompressor (Druckquelle) |
| 14 | Hauptleitung |
| 16 | Lufttrockner |
| 18 | Drossel |
| 20 | Druckkammer |
| 21 | pneumatisches System |
| 22 | Druckentlastetes Ventil |
| 24 | Druckentlastetes Magnetventil |
| 26 | Entlüftungsleitung |
| 28 | Filter |
| 30 | Mittel |
| 32 | Schalldämpfer |
| 34 | Nebenleitung |
| 36 | Rückschlagventil |
| 38 | Druckbegrenzungsventil |
| 40 | Weiteres Druckbegrenzungsventil |
| 42 | Gehäuse |
| 44 | Ventilkörper |
| 46 | Magnetspule |
| 48 | Statische Dichtungen |
| 50 | Feder |
| 52 | Eingang |
| 54 | Ausgang |
| 56 | Dynamische Dichtungen |
| 58 | Druckraum |
| 60 | Druckbelastetes Magnetventil |
| 70 | Steuereinheit |
| 71 | Signalleitung |

## Patentansprüche

1. Vorrichtung zum Betreiben eines pneumatischen Systems (20) wie eine Luftfederungsanlage (21) in Fahrzeugen, umfassend
- eine Druckquelle (12),
eine Druckkammer (20),
- eine Hauptleitung (14), welche die Druckquelle (12) mit der Druckkammer (20) verbindet,
- eine Entlüftungsleitung (26), die die Hauptleitung (14) und die Umgebung (U) miteinander verbindet und
- ein Entlüftungs-Ventil (22), welches in der Entlüftungsleitung (26) angeordnet ist und in einem ersten Zustand die Entlüftungsleitung (26) verschließt und in einem zweiten Zustand die Entlüftungsleitung (26) durchschaltet, wobei das Entlüftungs-Ventil (22) als ein druckentlastetes Ventil (22) zum Entlüften der Druckkammer (20) bzw. des pneumatischen Systems (21) ausgeführt ist, **dadurch gekennzeichnet, dass** das Entlüftungs-Ventil (22) als druckentlastetes Magnetventil (24) ausgebildet ist und
eine Steuereinheit (70) mittels einer Signalleitung (71) mit dem Magnetventil (24) derart in Verbindung steht, dass die Hubhöhe eines Ventilkörpers (44) regelbar ist, um die Durchflussmenge zu steuern und
die Schaltgeschwindigkeit des Ventilkörpers (44) derart beeinflusst wird, insbesondere eingeschränkt wird, um das Ablassgeräusch zu reduzieren.

2. Vorrichtung nach Anspruch 1, **dadurch gekennzeichnet, dass** die Nennweite des druckentlasteten Magnetventils (24) im Bereich von 2mm bis 8mm , vorzugsweise 4mm bis 6mm, liegt.

3. Vorrichtung nach Anspruch 1 oder 2, **dadurch gekennzeichnet, dass** das Magnetventil (24) durch ein PWM -Signal oder Taktung angesteuert wird.

4. Vorrichtung nach einem der vorherigen Ansprüche, **dadurch gekennzeichnet, dass** ein Lufttrockner (16) in der Hauptleitung (14) angeordnet ist.

5. Vorrichtung nach Anspruch 4, **dadurch gekennzeichnet, dass** die Entlüftungsleitung (26) zwischen der Druckquelle (12) und dem Lufttrockner (16) von der Hauptleitung (14) abzweigt

6. Vorrichtung nach Anspruch 4, **dadurch gekennzeichnet, dass** die Entlüftungsleitung (26) zwischen dem Lufttrockner (16) und der Druckkammer (20) von der Hauptleitung (14) abzweigt.

7. Vorrichtung nach einem der vorherigen Ansprüche,
wobei die Vorrichtung eine an einer ersten Stelle (S1) von der Hauptleitung (14) abzweigende und an einer zweiten Stelle (S2) in die Hauptleitung (14) mündende Nebenleitung (34) umfasst, **dadurch gekennzeichnet, dass** zwischen der ersten Stelle (S1) und der zweiten Stelle (S2) in der Hauptleitung (14) ein in Richtung der ersten Stelle (S1) öffnendes erstes Rückschlagventil (36) und in der Nebenleitung (34) ein in Richtung der zweiten Stelle (S2) öffnendes zweites Rückschlagventil (38) angeordnet ist, wobei das zweite Rückschlagventil (38) eine Restdruckhaltefunktion aufweist.

8. Vorrichtung nach einem der vorherigen Ansprüche, **dadurch gekennzeichnet, dass** eine Drossel (18) in der Hauptleitung zwischen dem Lufttrockner (16) und der Druckkammer (20) oder zwischen der zweiten Stelle (S2) und der Druckkammer (20) oder in der Nebenleitung (34) angeordnet ist.

9. Vorrichtung nach einem der vorherigen Ansprüche, **dadurch gekennzeichnet, dass** von der Hauptleitung (14) oder der Entlüftungsleitung (40) ein Druckbegrenzungsventil (40), insbesondere ein Überdruckventil (40), abzweigt.

10. Vorrichtung nach einem der vorherigen Ansprüchen, **dadurch gekennzeichnet, dass** das druckentlastete Ventil (22) einen Druckraum (58) aufweist, welcher in einem ersten, geschlossenen, Zustand des druckentlasteten Ventils (22) mit einem Eingang (52) in Verbindung steht und in einem zweiten, offenen, Zustand mit einem Eingang (52) und einem Ausgang (54) in Verbindung steht.

11. Vorrichtung nach Anspruch 10, **dadurch gekennzeichnet, dass** der Druckraum (58) und der Eingang (52) über eine Druckentlastungsleitung (60) in Verbindung stehen.

12. Vorrichtung nach Anspruch 11, **dadurch gekennzeichnet, dass** die Druckentlastungsleitung (60) innerhalb eines Ventilkörpers (44) des druckentlasteten Ventils (22) angeordnet ist.

13. Vorrichtung nach Anspruch 11 oder 12, **dadurch gekennzeichnet, dass** die Druckentlastungsleitung (60) innerhalb eines Gehäuses (42) des druckentlasteten Ventils (22) angeordnet ist.

14. Verfahren zum Entlüften eines pneumatischen Systems (20) nach einem der Ansprüche 1 bis 13, wobei von einer Steuereinheit (71) über eine Signalleitung (71) ein Entlüftungs-Ventil (22) in einer Entlüftungsleitung (26) angesteuert wird, **dadurch gekennzeichnet, dass** eine Durchflussmenge des Entlüftungs-Ventils (22) regelbar und/oder steuerbar ist, und
die Durchflussmenge des Entlüftungs-Ventils (22) in Abhängigkeit von der Schaltfrequenz des Ventilkörpers (44) regelbar und/oder steuerbar ist, um das Ablassgeräusch zu reduzieren.

15. Verfahren nach Anspruch 14, **dadurch gekennzeichnet, dass**
die Durchflussmenge des Entlüftungs-Ventils (22) in Abhängigkeit von einer Öffnungszeit tₒ des Entlüftungs-Ventils (22) regelbar und/oder steuerbar ist, um das Ablassgeräusch zu reduzieren.

16. Verfahren nach Anspruch 14, **dadurch gekennzeichnet, dass**
die Durchflussmenge des Entlüftungs-Ventils (22) in Abhängigkeit von einer Ablasscharakteristik des pneumatischen Systems (20) regelbar und/oder steuerbar ist.

17. Verfahren nach einem der Ansprüche 14 bis 16, **dadurch gekennzeichnet, dass** die Durchflussmenge des Entlüftungs-Ventils (22) in Abhängigkeit von einem PWM -Signal und/oder einer Strom-Taktung und/oder einer Spannungs-Taktung regelbar und/oder steuerbar ist.

## Claims

1. Apparatus for operating a pneumatic system (20), such as an air suspension installation (21) in vehicles, comprising
- a pressure source (12),
- a pressure chamber (20),
- a main line (14), which connects the pressure source (12) to the pressure chamber (20),
- a vent line (26), which connects the main line (14) and the environment (U) to one another, and
- a vent valve (22), which is arranged in the vent line (26) and which, in a first state, closes the vent line (26) and, in a second state, through-connects the vent line (26),
wherein the vent valve (22) is embodied as a pressure-relieved valve (22) for venting the pressure chamber (20) or the pneumatic system (21), **characterized in that** the vent valve (22) is designed as a pressure-relieved solenoid valve (24) and a control unit (70) is connected to the solenoid valve (24) by means of a signal line (71) in such a way that the stroke height of a valve element (44) can be adjusted in order to control the rate of flow and the switching speed of the valve element (44) is influenced, in particular restricted, in such a way as to reduce the discharge noise.

2. Apparatus according to Claim 1, **characterized in that** the nominal diameter of the pressure-relieved solenoid valve (24) is in a range of from 2mm to 8mm, preferably 4mm to 6mm.

3. Apparatus according to Claim 1 or 2, **characterized in that** the solenoid valve (24) is activated by a PWM signal or by pulsing.

4. Apparatus according to one of the preceding claims, **characterized in that** an air dryer (16) is arranged in the main line (14).

5. Apparatus according to Claim 4, **characterized in that** the vent line (26) branches off from the main line (14) between the pressure source (12) and the air dryer (16).

6. Apparatus according to Claim 4, **characterized in that** the vent line (26) branches off from the main line (14) between the air dryer (16) and the pressure chamber (20).

7. Apparatus according to one of the preceding claims, wherein the apparatus comprises a secondary line (34), which branches off from the main line (14) at a first location (S1) and opens into the main line (14) at a second location (S2), **characterized in that** a first nonreturn valve (36), which opens in the direction of the first location (S1), is arranged in the main line (14) between the first location (S1) and the second location (S2), and a second nonreturn valve (38), which opens in the direction of the second location (S2), is arranged in the secondary line (34), wherein the second nonreturn valve (38) has a residual pressure holding function.

8. Apparatus according to one of the preceding claims, **characterized in that** a restrictor (18) is arranged in the main line between the air dryer (16) and the pressure chamber (20) or between the second location (S2) and the pressure chamber (20) or in the secondary line (34).

9. Apparatus according to one of the preceding claims, **characterized in that** a pressure limiting valve (40), in particular a pressure relief valve (40), branches off from the main line (14) or the vent line (40).

10. Apparatus according to one of the preceding claims, **characterized in that** the pressure-relieved valve (22) has a pressure space (58), which is connected to an inlet (52) in a first, closed state of the pressure-relieved valve (22) and is connected to an input (52) and an output (54) in a second, open state.

11. Apparatus according to Claim 10, **characterized in that** the pressure space (58) and the inlet (52) are connected via a pressure relief line (60).

12. Apparatus according to Claim 11, **characterized in that** the pressure relief line (60) is arranged within a valve element (44) of the pressure-relieved valve (22).

13. Apparatus according to Claim 11 or 12, **characterized in that** the pressure relief line (60) is arranged within a housing (42) of the pressure-relieved valve (22).

14. Method for venting a pneumatic system (20) according to one of Claims 1 to 13, in which a vent valve (22) in a vent line (26) is activated by a control unit (71) via a signal line (71), **characterized in that** a rate of flow through the vent valve (22) can be subjected to closed-loop and/or open-loop control, and the rate of flow through the vent valve (22) can be subjected to closed-loop and/or open-loop control in accordance with the switching frequency of the valve element (44) in order to reduce the discharge noise.

15. Method according to Claim 14, **characterized in that** the rate of flow through the vent valve (22) can be subjected to closed-loop and/or open-loop control in accordance with an opening time to of the vent valve (22) in order to reduce the discharge noise.

16. Method according to Claim 14, **characterized in that** the rate of flow through the vent valve (22) can be subjected to closed-loop and/or open-loop control in accordance with a discharge characteristic of the pneumatic system (20).

17. Method according to one of Claims 14 to 16, **characterized in that** the rate of flow through the vent valve (22) can be subjected to closed-loop and/or open-loop control in accordance with a PWM signal and/or current pulsing and/or voltage pulsing.

## Revendications

1. Dispositif pour faire fonctionner un système pneumatique (20) tel qu'un équipement de suspension pneumatique (21) dans des véhicules, comprenant
- une source de pression (12),
- une chambre de compression (20)
- une conduite principale (14) qui relie la source de pression (12) à la chambre de compression (20),
- une conduite de purge d'air (26) qui relie ensemble la conduite principale (14) et l'environnement (U) et
- une vanne de purge d'air (22) qui est disposée dans la conduite de purge d'air (26) et qui, dans un premier état, ferme la conduite de purge d'air (26) et, dans un deuxième état, rend la conduite de purge d'air (26) passante,
la vanne de purge d'air (22) étant réalisée sous la forme d'une vanne hors pression (22) destinée à évacuer l'air hors de la chambre de compression (20) ou du système pneumatique (21),
**caractérisé en ce que**
la vanne de purge d'air (22) est réalisée sous la forme d'une électrovanne hors pression (24) et
une unité de commande (70) est en liaison avec l'électrovanne (24) au moyen d'une ligne de signal (71) de telle sorte que la hauteur d'excursion d'un corps de vanne (44) est réglable afin de contrôler le débit volumique et
la vitesse de commutation du corps de vanne (44) est influencée, notamment restreinte, de manière à réduire le bruit de l'évacuation.

2. Dispositif selon la revendication 1, **caractérisé en ce que** l'ouverture nominale de l'électrovanne hors pression (24) est comprise dans la plage de 2 mm à 8 mm, notamment de 4 mm à 6 mm.

3. Dispositif selon la revendication 1 ou 2, **caractérisé en ce que** l'électrovanne (24) est excitée par un signal PWM ou un cadencement.

4. Dispositif selon l'une des revendications précédentes, **caractérisé en ce qu'**un sécheur d'air (16) est disposé dans la conduite principale (14).

5. Dispositif selon la revendication 4, **caractérisé en ce que** la conduite de purge d'air (26) bifurque de la conduite principale (14) entre la source de pression (12) et le sécheur d'air (16).

6. Dispositif selon la revendication 4, **caractérisé en ce que** la conduite de purge d'air (26) bifurque de la conduite principale (14) entre le sécheur d'air (16) et la chambre de compression (20).

7. Dispositif selon l'une des revendications précédentes, le dispositif comportant une conduite auxiliaire (34) qui bifurque de la conduite principale (14) en un premier point (S1) et qui débouche dans la conduite principale (14) en un deuxième point (S2), **caractérisé en ce que** dans la conduite principale (14), entre le premier point (S1) et le deuxième point (S2), est disposé un premier clapet anti-retour (36) qui s'ouvre en direction du premier point (S1) et un deuxième clapet anti-retour (38) qui s'ouvre en direction du premier point (S2) dans la conduite auxiliaire (34), le deuxième clapet anti-retour (38) possédant une fonction de maintien de la pression résiduelle.

8. Dispositif selon l'une des revendications précédentes, **caractérisé en ce qu'**un étrangleur (18) est disposé dans la conduite principale entre le sécheur d'air (16) et la chambre de compression (20) ou entre le deuxième point (S2) et la chambre de compression (20) ou dans la conduite auxiliaire (34).

9. Dispositif selon l'une des revendications précédentes, **caractérisé en ce qu'**un limiteur de pression (40), notamment une soupape de surpression (40), bifurque de la conduite principale (14) ou de la conduite de purge d'air (40).

10. Dispositif selon l'une des revendications précédentes, **caractérisé en ce que** la vanne hors pression (22) possède une chambre de compression (58) qui, dans un premier état, fermé, de la vanne hors pression (22), se trouve en liaison avec une entrée (52) et, dans un deuxième état, ouvert, se trouve en liaison avec une entrée (52) et une sortie (54).

11. Dispositif selon la revendication 10, **caractérisé en ce que** la chambre de compression (58) et l'entrée (52) sont en liaison par le biais d'une conduite de décharge de pression (60).

12. Dispositif selon la revendication 11, **caractérisé en ce que** la conduite de décharge de pression (60) est disposée à l'intérieur d'un corps de vanne (44) de la vanne hors pression (22).

13. Dispositif selon la revendication 11 ou 12, **caractérisé en ce que** la conduite de décharge de pression (60) est disposée à l'intérieur d'un boîtier (42) de la vanne hors pression (22).

14. Procédé pour purger l'air d'un système pneumatique (20) selon l'une des revendications 1 à 13, une vanne de purge d'air (22) dans une conduite de purge d'air (26) étant excitée par une unité de commande (71) par le biais d'une ligne de signal (71), **caractérisé en ce qu'**un débit volumique de la vanne de purge d'air (22) peut être régulé et/ou commandé, et
le débit volumique de la vanne de purge d'air (22) peut être régulé et/ou commandé en fonction de la fréquence de commutation du corps de vanne (44) en vue de réduire le bruit de l'évacuation.

15. Procédé selon la revendication 14, **caractérisé en ce que** le débit volumique de la vanne de purge d'air (22) peut être régulé et/ou commandé en fonction d'un temps d'ouverture tₒ de la vanne de purge d'air (22) en vue de réduire le bruit de l'évacuation.

16. Procédé selon la revendication 14, **caractérisé en ce que** le débit volumique de la vanne de purge d'air (22) peut être régulé et/ou commandé en fonction d'une caractéristique d'évacuation du système pneumatique (20).

17. Procédé selon l'une des revendications 14 à 16, **caractérisé en ce que** le débit volumique de la vanne de purge d'air (22) peut être régulé et/ou commandé en fonction d'un signal PWM et/ou d'un cadencement du courant et/ou d'un cadencement de la tension.
